# EUROPÄISCHE PATENTANMELDUNG

(11) **EP 3 410 645 A1**
(43) Veröffentlichungstag der Anmeldung: **05.12.2018**
(21) Anmeldenummer: 17173509.5
(22) Anmeldetag: 30.05.2017
(51) Int. Cl.: H04L 12/403, H04L 12/64

(54) **VERFAHREN ZUM BETRIEB EINES KOMMUNIKATIONSNETZES EINES INDUSTRIELLEN AUTOMATISIERUNGSSYSTEMS UND KOPPEL-KOMMUNIKATIONSGERÄT**

(71) Anmelder: Siemens Aktiengesellschaft, 80333 München (DE)
(72) Erfinder: Albrecht, Harald, 90475 Nürnberg (DE); Fischer, Thomas, 90475 Nürnberg (DE); Höme, Stephan, 90475 Nürnberg (DE); Jung, Konstantin, 90475 Nürnberg (DE)

(57) **Zusammenfassung**

Zur Datenübermittlung in einem Kommunikationsnetz eines industriellen Automatisierungssystems werden erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, werden innerhalb periodischer zweiter Zeitintervalle übermittelt, die komplementär zu den ersten Zeitintervallen sind. Den Datenströmen wird für Steuerungsprogramm-Zugriffe jeweils ein Datenstrom-Identifikator zugeordnet, der sowohl Datenstrom-Quelle-seitig als auch Datenstrom-Senke-seitig durch einen Datenstrom-Quelle-Identifikator und durch einen Steuerungsprogramm-Identifikator gebildet wird.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Für die gesicherte Übertragung von Audio- und Videodatenströmen über Ethernet-basierte Kommunikationsnetze entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch. Steuerungsdaten müssen nämlich üblicherweise innerhalb eines Bearbeitungszyklus übertragen und verarbeitet werden. Beispielsweise werden zu Beginn eines Bearbeitungszyklus von sämtlichen Sensoren Steuerungsdaten an eine zugeordnete speicherprogrammierbare Steuerung gesendet. Nach einer anschließenden Berechnung auf Basis von den Sensoren empfangener Steuerungsdaten sendet die speicherprogrammierbare Steuerung Steuerungsdaten an Aktoren des industriellen Automatisierungssystems. Danach erfolgt innerhalb eines nächsten Bearbeitungszyklus eine erneute Sensordatenabfrage. Damit ausreichend Zeit für eine Verarbeitung von Steuerungsdaten innerhalb eines Bearbeitungszyklus verbleibt, sollten Datenrahmen mit Steuerungsdaten möglichst zu Beginn eines Bearbeitungszyklus übertragen werden, insbesondere bei Verwendung dezentraler Peripheriegeräte oder dezentraler Ein- und Ausgabeeinheiten.

Aus WO 2014/072374 A1 ist ein Verfahren zur Übermittlung von Multicast-Datenströmen in einem industriellen Automatisierungssystem mittels Link-State-Routing-Protokollen bekannt, bei dem nicht für alle möglichen Knoten-Knoten-Verbindungen Routing-Tabellen berechnet werden, sondern nur für ausgewählte zeitkritische Pfade, insbesondere zwischen "Talkers" als Datenquellen und "Listeners" als Abonnenten von Datenquellen in industriellen Automatisierungssystemen. Für eine Berechnung von Routing-Pfaden in derartigen Kommunikationsnetzen werden Kommunikationsbeziehungen beschreibende Informationen mittels eines Link-State-Routing-Protokolls innerhalb des Kommunikationsnetzes verteilt. Die Informationen über Kommunikationsbeziehungen umfassen beispielsweise Angaben über eine Zusammenfassung von Kommunikationsteilnehmern innerhalb eines Multicast-Pfades bzw. über "Talkers" und zugeordnete "Listeners".

In EP 2827207 A1 ist ein Verfahren zur Übermittlung von Datenrahmen mittels eines Kommunikationsgeräts eines industriellen Automatisierungssystems beschrieben, bei dem mittels des Kommunikationsgeräts zu übermittelnden Datenrahmen jeweils eine Übermittlungspriorität zugeordnet ist. Für über zumindest einen ausgewählten Anschluss des Kommunikationsgeräts übermittelte Datenrahmen, die eine über einem vorgebbaren Prioritätsschwellwert liegende Übermittlungspriorität aufweisen, wird eine übermittelte Datenmenge erfasst. Die übermittelte Datenmenge wird periodisch innerhalb zumindest eines Überwachungszyklus erfasst. Die für jeden Überwachungszyklusdurchlauf erfasste Datenmenge wird auf eine Überschreitung eines vorgebbaren Mengenschwellwerts überwacht. Der ausgewählte Anschluss wird bei einer Überschreitung des Mengenschwellwerts für einen Überwachungszyklusdurchlauf während einer Sperrzeit bis zu einem Ende des jeweiligen Überwachungszyklusdurchlaufs gegen eine Übermittlung von Datenrahmen mit einer über dem Prioritätsschwellwert liegenden Übermittlungspriorität gesperrt.

Zur Datenübermittlung in einem Kommunikationsnetz eines industriellen Automatisierungssystems werden entsprechend EP 3038325 A1 erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste Teilintervalle und zweite Teilintervalle unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

Aus der älteren europäischen Patentanmeldung mit dem Anmeldeaktenzeichen 16206604.7 ist ein Verfahren zur Bereitstellung eines erweiterten Namensdienstes für ein industrielles Automatisierungssystem, bei dem in einem Namensdienstsystem Name-Adress-Zuordnungen zwischen Gerätenamen und Kommunikationsnetzadressen erfasst werden. Im Namensdienstsystem erfasste Gerätenamen weisen eine durch eine Baumstruktur repräsentierte hierarchische Gliederung auf. Außerdem werden im Namensdienstsystem zusätzlich Zuordnungen zwischen Gerätenamen und Anlagenkennzeichen erfasst. Dabei werden die Anlagenkennzeichen jeweils mit einem Verweis auf einen zugeordneten Gerätenamen in einem separaten Teilbaum innerhalb derselben Baumstruktur wie die Gerätenamen erfasst. Durch eine Indizierungseinheit wird für den die Anlagenkennzeichen umfassenden Teilbaum ein Suchindex für eine Suche nach Anlagenkennzeichen bzw. Bestandteilen von Anlagenkennzeichen erzeugt, wobei der Suchindex in die Anlagenkennzeichen codierte Informationen umfasst.

In Time Sensitive Networks (TSN) entsprechend IEEE 802.1Q können für einzelne Datenströme in einem LAN bestimmte garantierte Qualitätsparameter, wie Latenz und Bandbreite, definiert werden. Dabei identifizieren Steuerungsprogramme bzw. Applikationen ihre Datenströme mit Hilfe von Stream-Identifiern, die aus 64bit langen Strings ohne jegliche innere Struktur gebildet werden.

Der vorliegenden Erfindung liegt die Aufgabe zugrunde, ein Verfahren zum Betrieb eines Kommunikationsnetzes eines industriellen Automatisierungssystems anzugeben, das eine zuverlässige und anwenderfreundliche Verwaltung, insbesondere Identifizierung und Reservierung, von Datenströmen in einem Kommunikationsnetz für eine Übermittlung zeitkritischer Daten ermöglicht, sowie ein zur Durchführung des Verfahrens geeignetes Koppel-Kommunikationsgerät anzugeben.

Diese Aufgabe wird erfindungsgemäß durch ein Verfahren mit den in Anspruch 1 angegebenen Merkmalen und durch ein Koppel-Kommunikationsgerät mit den in Anspruch 15 angegebenen Merkmalen gelöst. Vorteilhafte Weiterbildungen des erfindungsgemäßen Verfahrens sind in den abhängigen Ansprüchen angegeben.

Entsprechend dem erfindungsgemäßen Verfahren zum Betrieb eines Kommunikationsnetzes eines industriellen Automatisierungssystems werden erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Die Koppel-Kommunikationsgeräte können beispielsweise Router, Switches oder Bridges sein. Zweite Datenrahmen, die Sequenzen von Datenrahmen umfassenden Datenströmen zugeordnet sind, werden durch die Koppel-Kommunikationsgeräte nur innerhalb periodischer zweiter Zeitintervalle übermittelt, die komplementär zu den ersten Zeitintervallen sind. Für die zweiten Datenrahmen wird eine jeweils übermittelte Datenmenge erfasst und auf eine Überschreitung eines vorgegeben Mengenschwellwerts überprüft. Bei einer Überschreitung des Mengenschwellwerts wird eine Übermittlung der zweiten Datenrahmen abgebrochen, pausiert bzw. mit einer reduzierten Priorisierung fortgesetzt.

Erfindungsgemäß umfassen die Datenströme jeweils zumindest eine Datenstrom-Quelle und zumindest eine Datenstrom-Senke und sind einem verteilten Steuerungsprogramm bzw. einer TSN-Applikation innerhalb des Automatisierungssystems zugeordnet. Den Datenströmen wird für Steuerungsprogramm-Zugriffe jeweils ein Datenstrom-Identifikator zugeordnet, der sowohl an der Datenstrom-Quelle bzw. Talker-seitig als auch an der Datenstrom-Senke bzw. Listener-seitig durch einen der Datenstrom-Quelle zugeordneten Datenstrom-Quelle-Identifikator und durch einen Steuerungsprogramm-Identifikator gebildet wird. Auf diese Weise können Datenströme bzw. TSN-Streams kollisionsfrei und aufwandsarm reserviert, identifiziert und genutzt werden.

Vorzugsweise wird der Datenstrom-Quelle-Identifikator jeweils selbständig durch einen Datenstrom-Quelle-seitigen Steuerungsprogrammteil bzw. Talker-Teil einer TSN-Applikation und durch einen Datenstrom-Senke-seitigen Steuerungsprogrammteil bzw. Listener-Teil einer TSN-Applikation ermittelt. Entsprechend einer besonders bevorzugten Ausgestaltung des erfindungsgemäßen Verfahrens umfasst der Datenstrom-Quelle-Identifikator eine MAC-Adresse eines der Datenstrom-Quelle zugeordneten Kommunikations- bzw. Automatisierungsgeräts. Darüber hinaus kann die MAC-Adresse des der Datenstrom-Quelle zugeordneten Kommunikations- bzw. Automatisierungsgeräts entsprechend Address Resolution Protocol oder Neighbor Discovery Protocol aus einer IPv4- oder IPv6-Adresse des der Datenstrom-Quelle zugeordneten Kommunikations- bzw. Automatisierungsgeräts ermittelt werden. Zusätzlich können durch einen dem industriellen Automatisierungssystem zugeordneten Namensdienst- bzw. DNS-Server Name-Adress-Zuordnungen für Datenstrom-Quellen zugeordnete Kommunikations- bzw. Automatisierungsgeräte gespeichert werden. In diesem Fall kann die IPv4- oder IPv6-Adresse des der Datenstrom-Quelle zugeordneten Kommunikations- bzw. Automatisierungsgeräts mittels einer an den Namensdienst-Server gerichteten Namensauflösungsanfrage ermittelt werden. Vorteilhafterweise umfasst jedes einer Datenstrom-Quelle zugeordnete Kommunikations- bzw. Automatisierungsgerät jeweils ein Namensdienstmodul, das eine Erfassung einer aktuellen Name-Adress-Zuordnung für das jeweilige Kommunikations- bzw. Automatisierungsgerät durch den Namensdienst-Server veranlasst.

Entsprechend einer weiteren vorteilhaften Ausgestaltung der vorliegenden Erfindung wird der Steuerungsprogramm-Identifikator jeweils selbständig durch den Datenstrom-Quelle-seitigen Steuerungsprogrammteil und durch den Datenstrom-Senke-seitigen Steuerungsprogrammteil ermittelt. Dabei umfasst der Steuerungsprogramm-Identifikator vorzugsweise eine Angabe - beispielsweise in Analogie zu "well known ports" - über einen durch das Steuerungsprogramm bereitgestellten Automatisierungsdienst oder über eine durch das Steuerungsprogramm bereitgestellte Automatisierungsfunktion.

Dritte Datenrahmen, für deren Übermittlung keine oder eine unter einem vorgegebenen Schwellwert liegende Dienstgüte festgelegt ist, werden entsprechend einer bevorzugten Weiterbildung des erfindungsgemäßen Verfahrens durch die Koppel-Kommunikationsgeräte nur innerhalb der zweiten Zeitintervalle übermittelt. Dabei werden die dritten Datenrahmen - quasi als "best effort traffic" - unpriorisiert innerhalb der zweiten Zeitintervalle übermittelt. Vorzugsweise wird die jeweils übermittelte Datenmenge für die Datenströme durch die Koppel-Kommunikationsgeräte periodisch innerhalb eines Überwachungszyklus erfasst, der zumindest ein erstes und ein zweites Zeitintervall umfasst. In diesem Fall wird die für jeden Überwachungszyklusdurchlauf erfasste Datenmenge auf eine Überschreitung eines vorgegeben Mengenschwellwerts überprüft. Den Datenströmen kann beispielsweise jeweils eine festgelegte Dienstgüte zugeordnet sein, wobei die Datenströme innerhalb der zweiten Zeitintervalle jeweils mit einer ihrer zugeordneten Dienstgüte entsprechenden Priorisierung bzw. Datenrate übermittelt werden. Insbesondere kann der jeweilige Mengenschwellwert durch die einem Datenstrom jeweils zugeordnete Dienstgüte vorgegeben sein. Die erfasste Datenmenge wird vorzugsweise jeweils zu Beginn eines jeden Überwachungszyklusdurchlaufs zurückgesetzt.

Die vorliegende Erfindung wird nachfolgend an einem Ausführungsbeispiel anhand der Zeichnung näher erläutert. Es zeigt
- Figur 1: ein Kommunikationsnetz mit mehreren Switches und einer schematischen zeitlichen Datenstellung einer Übermittlung von Datenströmen,
- Figur 2: eine schematische Darstellung eines Switches gemäß Figur 1,
- Figur 3: eine schematische Darstellung eines Kommunikationsgeräts an einer Datenstrom-Quelle,
- Figur 4: eine schematische Darstellung eines Kommunikationsgeräts an einer Datenstrom-Senke.

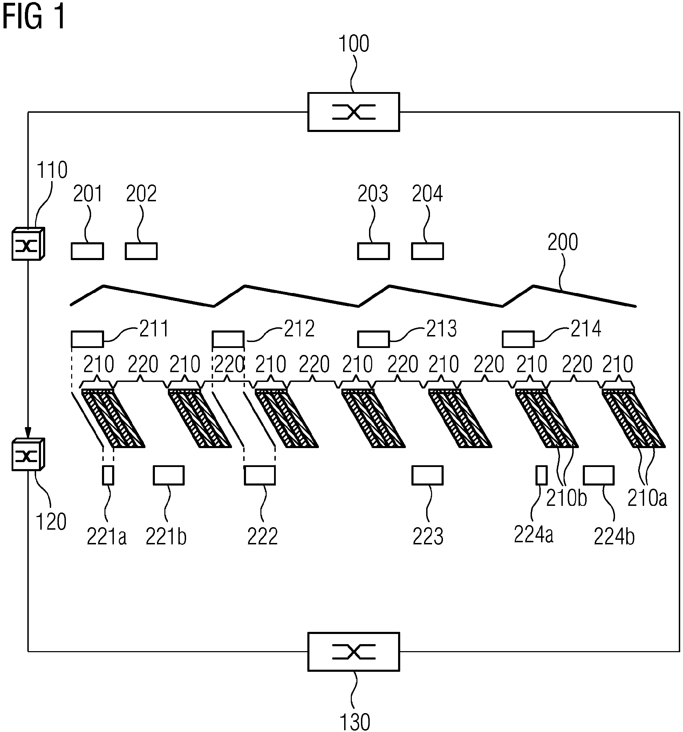

Das in Figur 1 dargestellte Kommunikationsnetz umfasst mehrere Switches 100, 110, 120, 130 die im vorliegenden Ausführungsbeispiel innerhalb einer Ringtopologie miteinander verbindbar sind. Zur Vermeidung einer Schleifenbildung wird jedoch genau ein Anschluss eines der Switches 100, 110, 120, 130 in einem für Nutzdaten nicht weiterleitenden Zustand betrieben. An die Switches 100, 110, 120, 130 können jeweils Steuerungs- bzw. Feldgeräte eines industriellen Automatisierungssystems angeschlossen werden, beispielsweise speicherprogrammierbare Steuerungen oder dezentrale Peripheriegeräte.

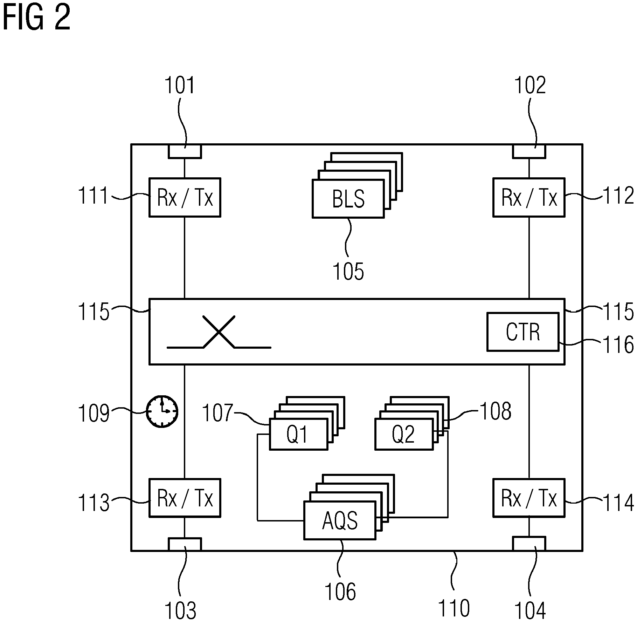

Die Switches 100, 110, 120, 130 sind im vorliegenden Ausführungsbeispiel hinsichtlich Aufbau und Funktionalität identisch. Repräsentativ für die Switches 100, 110, 120, 130 ist der Switch 110 in Figur 2 schematisch dargestellt. Der Switch 110 umfasst im vorliegenden Ausführungsbeispiel vier Sende- und Empfangseinheiten 111-114, die jeweils einen Anschluss 101-104 für eine Kommunikationsverbindung innerhalb eines industriellen Automatisierungssystems. Die Sende- und Empfangseinheiten 111-114 sind über einen Backplane Switch 115 mit zugeordnetem Controller 116 steuerbar miteinander verbunden. Den Sende- und Empfangseinheiten 111-114 sind beispielsweise jeweils eine erste Warteschlange 107 und eine zweite Warteschlange 108 für eine Übermittlung von Steuerungsdaten für das Automatisierungssystem zugeordnet. Dabei werden erste Datenrahmen, die Steuerungsdaten für das Automatisierungssystem umfassen, durch die Switches 100, 110, 120, 130 nur innerhalb periodischer erster Zeitintervalle 210 übermittelt. Zweite Datenrahmen 201-204, 211-214, 221-224, die Sequenzen von Datenrahmen umfassenden Datenströmen zugeordnet sind, sowie dritte Datenrahmen, für deren Übermittlung keine oder eine unter einem vorgegebenen Schwellwert liegende Dienstgüte festgelegt ist, werden dagegen nur innerhalb periodischer zweiter Zeitintervalle 220 übermittelt. Die dritten Datenrahmen werden im vorliegenden Ausführungsbeispiel unpriorisiert innerhalb der zweiten Zeitintervalle 220 entsprechend "best effort" übermittelt.

Entsprechend Figur 1 sind die ersten und zweiten Zeitintervalle 210, 220 komplementär zueinander. Grundsätzlich können zwischen die ersten und zweiten Zeitintervalle 210, 220 zusätzlich Schutz- bzw. Sperrzeitintervalle vorgesehen sein. Die Switches 100, 110, 120, 130 sind untereinander zeitsynchronisiert. Hierzu umfasst der Switch 110 entsprechend Figur 2 eine Synchronisationseinheit 109. Die ersten Zeitintervalle 210 sind jeweils in eine Mehrzahl erster Teilintervalle 210a und zweiter Teilintervall 210b unterteilt, wobei erste und zweite Teilintervalle 210a, 210b jeweils abwechselnd aufeinander folgen. Während der ersten Teilintervalle 210a durch die Switches 100, 110, 120, 130 empfangene weiterzuleitende erste Datenrahmen werden in die erste Warteschlange 107 für die jeweilige Sende- und Empfangseinheit 111-114 eingefügt. Demgegenüber werden während der zweiten Teilintervalle 210b empfangene weiterzuleitende erste Datenrahmen in die jeweilige zweite Warteschlange 108 eingefügt.

Für eine Weiterleitung werden die ersten Datenrahmen aus der jeweiligen ersten Warteschlange während eines ihrer Einfügung jeweils nachfolgenden zweiten Teilintervalls 210b entnommen. Analog dazu werden erste Datenrahmen aus der jeweiligen zweiten Warteschlange während eines ihrer Einfügung jeweils nachfolgenden ersten Teilintervalls 210a für eine Weiterleitung entnommen. Für eine Steuerung einer Befüllung und einer Entnahme von ersten Datenrahmen aus den ersten und zweiten Warteschlangen 107, 108 umfasst der Switch 110 entsprechend Figur 2 pro Warteschlangenpaar jeweils eine Warteschlangensteuerungseinheit 106, die eine alternierende Warteschlangenumschaltung implementiert. Warteschlangensteuerungseinheiten 106 können beispielsweise derart ausgestaltet und eingerichtet sein, dass weiterzuleitende erste Datenrahmen durch den jeweiligen Switch bei jeweils einer leeren Warteschlange und einer befüllten Warteschlange unabhängig von einem durch erste und zweite Teilintervalle 210a, 210b vorgegebenen Entnahmezeitplan im Sinn eines "shortest queue first" aus der befüllten Warteschlange entnommen und weitergeleitet werden.

Den zweiten Datenrahmen 201-204, 211-214, 221-224 ist jeweils eine festgelegte Dienstgüte für ihre Übermittlung zugeordnet, wobei die zweiten Datenrahmen innerhalb der zweiten Zeitintervalle 220 jeweils mit einer ihrer zugeordneten Dienstgüte entsprechenden Priorisierung bzw. Datenrate übermittelt werden. Hierzu umfasst der Switch 110 pro Sende- und Empfangseinheit 111-114 jeweils eine Datenmengenerfassungseinheit 105 zur Implementierung eines Burst Limiting Shaper oder Credit-based Shaper für zweite Datenrahmen.

In Figur 1 wird eine Wirkungsweise eines Burst Limiting Shaper bzw. Credit-based Shaper in Bezug auf durch den Switch 110 empfangene zweite Datenrahmen 201-204 und für eine Weiterleitung geplante zweite Datenrahmen 211-214 veranschaulicht. Mittels eines Burst Limiting Shaper bzw. Credit-based Shaper wird für die zweiten Datenrahmen eine jeweils übermittelte bzw. geplante Datenmenge 200 erfasst. Dabei wird die übermittelte bzw. geplante Datenmenge 200 periodisch innerhalb eines Überwachungszyklus erfasst, der zumindest ein erstes und ein zweites Zeitintervall 210, 220 umfasst. Die für jeden Überwachungszyklusdurchlauf erfasste Datenmenge wird dabei auf eine Überschreitung eines vorgegeben Mengenschwellwerts überprüft. Bei einer Überschreitung des Mengenschwellwerts wird eine Übermittlung der zweiten Datenrahmen pausiert (Credit-based Shaper), mit einer reduzierten Priorisierung fortgesetzt (Burst Limiting Shaper) oder abgebrochen. Dabei ist der jeweilige Mengenschwellwert durch die einem Datenstrom jeweils zugeordnete Dienstgüte vorgegeben. Jeweils zu Beginn eines jeden Überwachungszyklusdurchlaufs wird die erfasste Datenmenge zurückgesetzt. Bei einer pausierten Übermittlung von zweiten Datenrahmen wird die erfasste Datenmenge um einen zur jeweiligen Wartezeit proportionalen Wert reduziert.

Da eine Übermittlung zweiter Datenrahmen nur innerhalb zweiter Zeitintervalle 220 erfolgt, werden die für eine Weiterleitung zum Switch 120 geplanten zweiten Datenrahmen 211, 214 im Gegensatz zu den zweiten Datenrahmen 212, 213 mit einer Pausierung übermittelt. Dementsprechend wird ein Teil 221a, 224a der Datenrahmen 211, 214 vor der Pausierung durch den Switch 120 empfangen, während ein anderer Teil 221b, 224b nach der Pausierung empfangen wird. Die aus den übermittelten Datenrahmen 212, 213 hervorgehenden empfangenen Datenrahmen 222, 223 unterliegen im vorliegenden Ausführungsbeispiel dagegen lediglich einer Signallaufzeitverzögerung auf einer Verbindung zwischen den Switches 110 und 120.

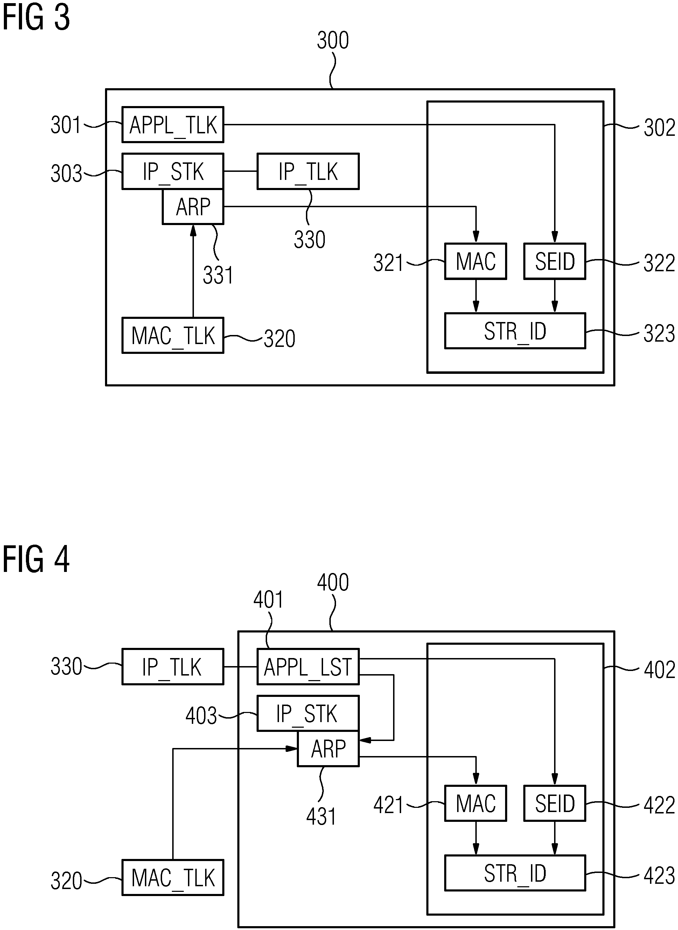

In den Figuren 3 und 4 ist jeweils ein Kommunikationsgerät 300, 400 schematisch dargestellt, das einem Talker als Datenstrom-Quelle bzw. einem Listener als Datenstrom-Senke zugeordnet ist und eine Funktionseinheit 303, 403 zur Implementierung eines IP-Stacks umfasst. Die Kommunikationsgeräte 300, 400 sind an jeweils unterschiedliche Switches 100, 110, 120, 130 angeschlossen. Grundsätzlich können Datenströme jeweils einen oder mehrere Talker und einen oder mehrere Listener umfassen. Im vorliegenden Ausführungsbeispiel sind die Datenströme jeweils einem verteilten Steuerungsprogramm innerhalb des Automatisierungssystems zugeordnet. Dabei umfasst das verteilte Steuerungsprogramm zumindest einen Talker-seitigen Steuerungsprogrammteil 301 und durch einen Listener-seitigen Steuerungsprogrammteil 401.

Für Steuerungsprogramm-Zugriffe wird den Datenströmen jeweils ein Datenstrom-Identifikator 323, 423 zugeordnet, der sowohl an der Datenstrom-Quelle als auch an der Datenstrom-Senke durch einen der Datenstrom-Quelle zugeordneten Datenstrom-Quelle-Identifikator 321, 421 und durch einen Steuerungsprogramm-Identifikator 322, 422 gebildet wird. Der Datenstrom-Quelle-Identifikator 321, 421 wird jeweils selbständig durch ein dem Talker-seitigen Steuerungsprogrammteil 301 zugeordnetes Steuerungsmodul 302 und durch ein dem Listener-seitigen Steuerungsprogrammteil 401 zugeordnetes Steuerungsmodul 402 ermittelt. In entsprechender Weise wird auch der Steuerungsprogramm-Identifikator 322, 422 durch die Steuerungsmodule 302, 402 selbständig ermittelt. In Analogie zu "well known ports" umfasst der Steuerungsprogramm-Identifikator im vorliegenden Ausführungsbeispiel eine Angabe über einen durch das Steuerungsprogramm bereitgestellten Automatisierungsdienst oder über eine durch das Steuerungsprogramm bereitgestellte Automatisierungsfunktion. Der Steuerungsprogramm-Identifikator 322, 422 kann somit als Stream-End-ID behandelt werden und wird idealerweise für jede TSN-Applikation (Time Sensitive Networks) geeignet festgelegt. Insgesamt umfasst der Datenstrom-Identifikator 323, 423 im vorliegenden Ausführungsbeispiel 64 bit. Dabei umfassen die ersten 48 bit den Datenstrom-Quelle-Identifikator 321, 421, während die letzten 16 bit den Steuerungsprogramm-Identifikator 322, 422 umfassen.

Vorzugsweise wird der Datenstrom-Quelle-Identifikator 323, 423 aus der MAC-Adresse 320 des Talker-seitigen Kommunikationsgeräts 300 gebildet. Diese MAC-Adresse 320 wird im vorliegenden Ausführungsbeispiel entsprechend Address Resolution Protocol (ARP) aus der IP-Adresse des Talker-seitigen Kommunikationsgeräts 300 ermittelt. Hierzu umfassen sowohl das Talker-seitige Kommunikationsgerät 300 als auch das Listenerseitige Kommunikationsgerät 400 jeweils eine Funktionseinheit 331, 431 zur ARP-Implementierung. Entsprechend einer alternativen Ausführungsform kann die MAC-Adresse 320 des Talker-seitigen Kommunikationsgeräts 300 auch entsprechend Neighbor Discovery Protocol aus dessen IPv6-Adresse ermittelt werden.

Entsprechend einer besonders vorteilhaften Ausführungsform werden durch einen dem industriellen Automatisierungssystem zugeordneten Namensdienst-Server Name-Adress-Zuordnungen für Datenstrom-Quellen zugeordnete Kommunikations- bzw. Automatisierungsgeräte gespeichert. Auf diese Weise können die IP-Adressen von Talker-seitigen Kommunikations- bzw. Automatisierungsgeräts mittels einer an den Namensdienst-Server gerichteten Namensauflösungsanfrage ermittelt werden. Vorzugsweise umfasst jedes einer Datenstrom-Quelle zugeordnete Kommunikations- bzw. Automatisierungsgerät jeweils ein Namensdienstmodul, das eine Erfassung einer aktuellen Name-Adress-Zuordnung für das jeweilige Kommunikations- bzw. Automatisierungsgerät durch den Namensdienst-Server veranlasst.

## Patentansprüche

1. Verfahren zum Betrieb eines Kommunikationsnetzes eines industriellen Automatisierungssystems, bei dem
- erste Datenrahmen, die Steuerungsdaten für das Automatisierungssystem umfassen, durch Koppel-Kommunikationsgeräte (100, 110, 120, 130) des Kommunikationsnetzes nur innerhalb periodischer erster Zeitintervalle (210) übermittelt werden,
- zweite Datenrahmen, die Sequenzen von Datenrahmen umfassenden Datenströmen zugeordnet sind, durch die Koppel-Kommunikationsgeräte nur innerhalb periodischer zweiter Zeitintervalle (220) übermittelt werden, die komplementär zu den ersten Zeitintervallen sind,
- für die zweiten Datenrahmen eine jeweils übermittelte Datenmenge erfasst und auf eine Überschreitung eines vorgegeben Mengenschwellwerts überprüft wird,
- eine Übermittlung der zweiten Datenrahmen bei einer Überschreitung des Mengenschwellwerts abgebrochen, pausiert und/oder mit einer reduzierten Priorisierung fortgesetzt wird,
- die Datenströme jeweils zumindest eine Datenstrom-Quelle (300) und zumindest eine Datenstrom-Senke (400) umfassen und einem verteilten Steuerungsprogramm innerhalb des Automatisierungssystems zugeordnet sind,
- den Datenströmen für Steuerungsprogramm-Zugriffe jeweils ein Datenstrom-Identifikator (323, 423) zugeordnet wird, der sowohl an der Datenstrom-Quelle als auch an der Datenstrom-Senke durch einen der Datenstrom-Quelle zugeordneten Datenstrom-Quelle-Identifikator (321, 421) und durch einen Steuerungsprogramm-Identifikator (322, 422) gebildet wird.

2. Verfahren nach Anspruch 1,
bei dem der Datenstrom-Quelle-Identifikator jeweils selbständig durch einen Datenstrom-Quelle-seitigen Steuerungsprogrammteil und durch einen Datenstrom-Senke-seitigen Steuerungsprogrammteil ermittelt wird.

3. Verfahren nach Anspruch 2,
bei dem der Datenstrom-Quelle-Identifikator eine MAC-Adresse eines der Datenstrom-Quelle zugeordneten Kommunikations- und/oder Automatisierungsgeräts umfasst.

4. Verfahren nach Anspruch 3,
bei dem die MAC-Adresse des der Datenstrom-Quelle zugeordneten Kommunikations- und/oder Automatisierungsgeräts entsprechend Address Resolution Protocol oder Neighbor Discovery Protocol aus einer IPv4- oder IPv6-Adresse des der Datenstrom-Quelle zugeordneten Kommunikations- und/oder Automatisierungsgeräts ermittelt wird.

5. Verfahren nach Anspruch 4,
bei dem durch einen dem industriellen Automatisierungssystem zugeordneten Namensdienst-Server Name-Adress-Zuordnungen für Datenstrom-Quellen zugeordnete Kommunikations- und/oder Automatisierungsgeräte gespeichert werden und bei dem die IPv4- oder IPv6-Adresse des der Datenstrom-Quelle zugeordneten Kommunikations- und/oder Automatisierungsgeräts mittels einer an den Namensdienst-Server gerichteten Namensauflösungsanfrage ermittelt wird.

6. Verfahren nach Anspruch 5,
bei dem jedes einer Datenstrom-Quelle zugeordnete Kommunikations- und/oder Automatisierungsgerät jeweils ein Namensdienstmodul umfasst, das eine Erfassung einer aktuellen Name-Adress-Zuordnung für das jeweilige Kommunikations- und/oder Automatisierungsgerät durch den Namensdienst-Server veranlasst.

7. Verfahren nach einem der Ansprüche 2 bis 6,
bei dem der Steuerungsprogramm-Identifikator jeweils selbständig durch den Datenstrom-Quelle-seitigen Steuerungsprogrammteil und durch den Datenstrom-Senke-seitigen Steuerungsprogrammteil ermittelt wird.

8. Verfahren nach Anspruch 7,
bei dem der Steuerungsprogramm-Identifikator eine Angabe über einen durch das Steuerungsprogramm bereitgestellten Automatisierungsdienst oder über eine durch das Steuerungsprogramm bereitgestellte Automatisierungsfunktion umfasst.

9. Verfahren nach einem der Ansprüche 1 bis 8,
bei dem dritte Datenrahmen, für deren Übermittlung keine oder eine unter einem vorgegebenen Schwellwert liegende Dienstgüte festgelegt ist, durch die Koppel-Kommunikationsgeräte nur innerhalb der zweiten Zeitintervalle übermittelt werden und bei dem die dritten Datenrahmen unpriorisiert innerhalb der zweiten Zeitintervalle übermittelt werden.

10. Verfahren nach einem der Ansprüche 1 bis 9,
bei dem die jeweils übermittelte Datenmenge für die Datenströme durch die Koppel-Kommunikationsgeräte periodisch innerhalb eines Überwachungszyklus erfasst wird, der zumindest ein erstes und ein zweites Zeitintervall umfasst und bei dem die für jeden Überwachungszyklusdurchlauf erfasste Datenmenge auf eine Überschreitung eines vorgegeben Mengenschwellwerts überprüft wird.

11. Verfahren nach einem der Ansprüche 1 bis 10,
bei dem den Datenströmen jeweils eine festgelegte Dienstgüte zugeordnet ist und bei dem die Datenströme innerhalb der zweiten Zeitintervalle jeweils mit einer ihrer zugeordneten Dienstgüte entsprechenden Priorisierung und/oder Datenrate übermittelt werden.

12. Verfahren nach Anspruch 11,
bei dem der jeweilige Mengenschwellwert durch die einem Datenstrom jeweils zugeordnete Dienstgüte vorgegeben ist.

13. Verfahren nach einem der Ansprüche 11 oder 12,
bei dem die erfasste Datenmenge jeweils zu Beginn eines jeden Überwachungszyklusdurchlaufs zurückgesetzt wird.

14. Verfahren nach einem der Ansprüche 1 bis 13,
bei dem die Koppel-Kommunikationsgeräte Router, Switches oder Bridges sind.

15. Koppel-Kommunikationsgerät für ein industrielles Automatisierungssystem zur Durchführung eines Verfahrens nach einem der Ansprüche 1 bis 14
- mit mehreren Anschlüssen für eine Verbindung mit innerhalb eines industriellen Kommunikationsnetzes miteinander verbundenen Kommunikationsgeräten,
- mit den Anschlüssen zugeordneten Sende- und Empfangseinheiten, denen zumindest eine Warteschlange zugeordnet ist,
- mit einem die Sende- und Empfangseinheiten miteinander verbindenden Koppelelement,
- wobei das Koppel-Kommunikationsgerät dafür ausgestaltet und eingerichtet ist, dass erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt werden,
- wobei das Koppel-Kommunikationsgerät dafür ausgestaltet und eingerichtet ist, dass zweite Datenrahmen, die Sequenzen von Datenrahmen umfassenden Datenströmen zugeordnet sind, durch die Koppel-Kommunikationsgeräte nur innerhalb periodischer zweiter Zeitintervalle übermittelt werden, die komplementär zu den ersten Zeitintervallen sind, wobei die Datenströme jeweils zumindest eine Datenstrom-Quelle und zumindest eine Datenstrom-Senke umfassen und einem verteilten Steuerungsprogramm innerhalb des Automatisierungssystems zugeordnet sind,
- wobei das Koppel-Kommunikationsgerät dafür ausgestaltet und eingerichtet ist, dass für die zweiten Datenrahmen eine jeweils übermittelte Datenmenge erfasst und auf eine Überschreitung eines vorgegeben Mengenschwellwerts überprüft wird,
- wobei das Koppel-Kommunikationsgerät dafür ausgestaltet und eingerichtet ist, dass eine Übermittlung der zweiten Datenrahmen bei einer Überschreitung des Mengenschwellwerts abgebrochen, pausiert und/oder mit einer reduzierten Priorisierung fortgesetzt wird,
- wobei das Koppel-Kommunikationsgerät dafür ausgestaltet und eingerichtet ist, dass den Datenströmen für Steuerungsprogramm-Zugriffe jeweils ein Datenstrom-Identifikator zugeordnet wird, der sowohl an der Datenstrom-Quelle als auch an der Datenstrom-Senke durch einen der Datenstrom-Quelle zugeordneten Datenstrom-Quelle-Identifikator und durch einen Steuerungsprogramm-Identifikator gebildet wird.
